**Europäisches Patentamt**

**European Patent Office**

**Office européen des brevets**

(19)

(11) **EP 1 154 031 A2**

(12) **EUROPÄISCHE PATENTANMELDUNG**

(43) Veröffentlichungstag:
14.11.2001 Patentblatt 2001/46

(51) Int Cl.$^7$: **C23C 4/02**, C23C 4/12

(21) Anmeldenummer: 01109644.3

(22) Anmeldetag: 19.04.2001

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **09.05.2000 DE 10022157**

(71) Anmelder: **Deutsches Zentrum für Luft- und
Raumfahrt e.V.
53175 Bonn (DE)**

(72) Erfinder: **Thaler, Heiko
71067 Sindelfingen (DE)**

(74) Vertreter: **Grimm, Ekkehard, Dipl.-Phys.
Patentanwälte
Grimm & Staudt
Edith-Stein-Strasse 22
63075 Offenbach (DE)**

(54) **Verfahren zum Bilden einer Wärmedämmstruktur**

(57) Die Erfindung beschreibt ein Verfahren zum Bilden einer Wärmedämmstruktur mit mindestens einer Wärmedämmschicht auf einem Substrat, die aus pulver- oder partikelförmigen Ausgangsmaterialien aufgebaut ist, wobei zwischen Substrat und Wärmedämmschicht eine Zwischen- oder Haftschicht aufgebracht wird, das dadurch gekennzeichnet ist, daß zum Bilden der Wärmedämmschicht(en) das Ausgangsmaterial thermisch auf dem Substratmaterial beschichtet wird, wobei die einzelnen Partikel in einer Flamme auf eine solche Temperatur gebracht werden, daß, zumindest ein Teil des Pulvers der eingesetzten Pulverfraktion, bei dem es sich um die Pulverpartikel mit dem kleineren Durchmesser handelt, nahezu durchgeschmolzen ist und der andere Teil der Pulverfraktion, bei dem es sich um die Pulverpartikel mit dem größeren Durchmesser handelt, nur oberflächlich angeschmolzen wird, wobei durch den Grad des Anschmelzens dieses Pulverteils die Porenstruktur gezielt eingestellt wird.

**Beschreibung**

Die vorliegende Erfindung betrifft ein Verfahren zum Bilden einer Wärmedämmstruktur mit mindestens einer Wärmedämmschicht auf einem Substrat, die aus pulver- oder partikelförmigen Ausgangsmaterialien aufgebaut ist, wobei zwischen Substrat und Wärmedämmschicht eine Zwischen- oder Haftschicht aufgebracht wird.

Ein Einsatzgebiet von Wärmedämmschichten ist die Beschichtung von Turbinen und Brennkammern sowie deren Teilen, um dadurch höhere Verbrennungstemperaturen zu erzielen. Solche Wärmedämmschichten werden mit den unterschiedlichsten Verfahren auf den entsprechenden Teilen aufgebracht. Hierzu sind beispielsweise Plasmaspritzen oder Elektronenstrahl-PVD zu nennen. Zur Sicherstellung der Haftfestigkeit solcher Oberflächenschichten werden üblicherweise die zu beschichtenden Substrate zunächst mit einer Zwischen- oder Haftschicht versehen. Es hat sich gezeigt, daß solche Wärmedämmschichten für die jeweiligen Anwendungsgebiete in ihren Eigenschaften angepaßt werden müssen. Dies kann durch die Art des eingesetzten Pulvers erfolgen; ein weiterer Parameter ist der Grad einer Porosität, den die gebildete Wärmedämmschicht aufweist.

Der vorliegenden Erfindung liegt die Aufgabe zugrunde, eine Oberflächenschicht aus Pulvermaterial aufzubauen, die überwiegend geschlossene Poren aufweist, wobei diese Oberflächenschicht durch einfach durchzuführende Verfahrensvorgänge erzeugt werden soll.

Gelöst wird die Aufgabe durch ein Verfahren zum Bilden einer Wärmedämmschicht der eingangs genannten Art, das dadurch gekennzeichnet ist, daß zum Bilden der Wärmedämmschicht(en) das Ausgangsmaterial thermisch auf dem Substratmaterial beschichtet wird, wobei die einzelnen Partikel in einer Flamme auf eine solche Temperatur gebracht werden, daß, zumindest ein Teil des Pulvers der eingesetzten Pulverfraktion, bei dem es sich um die Pulverpartikel mit dem kleineren Durchmesser handelt, nahezu durchgeschmolzen ist und der andere Teil der Pulverfraktion, bei dem es sich um die Pulverpartikel mit dem größeren Durchmesser handelt, nur oberflächlich angeschmolzen wird, wobei durch den Grad des Anschmelzens dieses Pulverteils die Porenstruktur gezielt eingestellt wird. Demzufolge wird zunächst eine geeignete Pulverfraktion mit einer vorgegebenen Pulverpartikeldurchmesserverteilung ausgewählt. Über die Verfahrensparameter beim thermischen Beschichten wird der Anschmelzgrad der Pulverpartikel so gewählt, daß die Pulverpartikel mit kleinerem Durchmesser der Pulverfraktion vollständig durchgeschmolzen werden, während die Pulverpartikel mit dem größeren Durchmesser der Pulverfraktion nur in ihrer Oberfläche angeschmolzen werden. Hierdurch bildet sich auf dem Substrat eine im wesentlichen geschlossenporige Struktur, wobei die Größe der Hohlräume bzw. geschlossenen Poren im wesentlichen durch die Partikel mit dem großen Partikeldurchmesser, die nur oberflächlich angeschmolzen sind, bestimmt wird. Die vollständig durchgeschmolzenen Partikel mit dem kleinen Durchmesser schließen die jeweiligen Poren oder Porenhohlräume ab, indem sie Zwischenräume zwischen den Partikeln mit großem Durchmesser ausfüllen. Ein weiterer Vorteil dieses Verfahrens ist dasjenige, daß während des schichtweisen Aufbaus der Wärmedämmschicht die Porosität beeinflußt und geändert werden kann, indem der Grad des oberflächlichen Anschmelzens der großen Partikel verringert oder verstärkt wird, wodurch sich kleinere oder größere, geschlossene Poren ergeben.

Über die vorstehend angegebene Änderung der Verfahrensparameter und damit den Grad des Anschmelzens der Oberfläche der Partikel kann auf die Wärmedämmschicht eine im wesentlichen geschlossene, dichte Deckschicht aufgebracht werden; hierzu werden die Partikel für die Deckschicht im wesentlichen vollständig aufgeschmolzen. Auf diese Art und Weise ist es auch möglich, mehrere Wärmedämmschichten zu bilden, die jeweils durch eine dichte Zwischenschicht voneinander getrennt sind, wobei auch diese dichten Zwischenschichten aus im wesentlichen vollständig aufgeschmolzenen Partikeln gebildet werden. Dies bedeutet, daß im wesentlichen die gesamte Pulverfraktion durch Veränderung der Verfahrensparameter zum Erzeugen solcher dichten Zwischenschichten oder Deckschichten aufgeschmolzen werden.

Ein wichtiger Verfahrensparameter beim Aufbau der Wärmedämmschicht ist der Abstand zwischen Flamme und Substrat, der im Bereich von 250 mm bis 500 mm, vorzugsweise im Bereich von 270 mm bis 350 mm, liegen sollte. Bei zu großen Abständen tritt eine zu frühe oberflächliche Erstarrung auf, die den Zusammenhalt der Partikel schwächt und die Bildung der geschlossenen Poren unterdrückt.

Sofern von Abständen zwischen Flamme/ Plasma und Substrat gesprochen wird, beziehen sich diese auf das Ende des jeweiligen Brenners.

Verfahrensgemäß können sehr unterschiedliche Pulverpartikel, bevorzugt Keramiken, auf einem Substrat zum Erzeugen der Wärmedämmstruktur aufgespritzt werden.

Es hat sich gezeigt, daß bevorzugt die Partikelgröße der eingesetzten Pulverfraktion im Bereich von 5 μm bis 150 μm liegen sollte.

Untersuchungen haben weiterhin gezeigt, daß eine Pulverfraktion eingesetzt werden sollte, die Partikel in einem Durchmesserbereich zwischen einem minimalen Partikeldurchmesser $d_{min}$ und einem maximalen Partikeldurchmesser $d_{max}$ umfaßt, die folgender Vorschrift genügt:

$$0,35 < \frac{\Delta d}{d_a}_{max} \leq 1 \text{ oder } \frac{\Delta d}{d_a}_{max} > 1$$

wobei $d_a{}^{max}$ den Pulverpartikeldurchmesser angibt, der in der gewählten Pulverfraktion den größten Anteil bildet, und wobei $\Delta d$ die Schwankungsbreite der Partikeldurchmesser um den Partikeldurchmesser darstellt, der am häufigsten in der gesamten Pulverfraktion vorkommt..

Für $d_a{}^{max}$ kann zur Vereinfachung auch der Vorschrift gefolgt werden:

$$d_a{}^{max} = \frac{d_{min} + d_{max}}{2}$$

Um die Bildung der geschlossenen Porenstruktur zu unterstützen, sollte der Grad des Anschmelzens m der Oberflächenschicht der Partikel folgender Vorschrift folgen

$$m = \frac{d - d_s{}^*}{d}$$

folgen,

wobei d den Partikeldurchmesser bezeichnet und wobei $d_s{}^*$ den Durchmesser des verbleibenden festen Kerns bezeichnet, wobei für m gilt

$$10\% < m \leq 100\%.$$

Weiterhin sollten bevorzugt zur Erzeugung der geschlossenen Porenstruktur Partikel in dem Fraktionsbereich

$$\frac{d_{min}}{d_{max}} < 0,7$$

eingesetzt werden.

Da, wie bereits erwähnt, die Bildung der geschlossenen Porenstruktur auch einen definierten Anteil an feinkörnigem Pulver erfordert, sollten Feinpartikel mit einer Partikelgröße im Bereich von 5 bis 50 μm, vorzugsweise von 10 μm bis 25 μm, in einem Anteil von 20 bis 80% bezogen auf die Masse vorliegen. Noch bevorzugter wird der Anteil auf 30 bis 50% bezogen auf die Masse eingestellt.

Eine solche Pulverteilung kann auch dadurch erstellt werden, indem mindestens 2 entsprechende Pulver bzw. Pulverfraktionen gemischt werden.

Zur Erhöhung insbesondere der Wärmedämmleistung, aber auch um sehr dicke Schichten mit einer hohen Stabilität aufbauen zu können, können die porösen Schichten durch Zwischenschichten getrennt werden.

Um solche Zwischenschichten zu erzeugen, kann auch die Pulverdurchsatzmenge gegenüber derjenigen, die bei der Erzeugung der darunterliegenden porösen Schichten eingesetzt wird, erhöht werden; gleichzeitig sollte auch der oberflächliche Anschmelzgrad der Partikel erhöht werden. Es hat sich gezeigt, daß die Erhöhung der Pulverdurchsatzmenge mindestens das 1,5-fache derjenigen Pulvermenge betragen sollte, die zum Aufbau der darunterliegenden porösen Schicht eingesetzt wurde. Eine verfahrenstechnisch einfach durchzuführende Maßnahme zur Änderung des Porenradius ist diejenige, die Leistung der eingesetzten Beschichtungsflamme und/oder den Druck innerhalb der Beschichtungskammer zu ändern bzw. geeignet einzustellen. Höhere Leistungen der Flamme und höhere Drücke in der Kammer führen zu geringeren Porenradien.

Von Vorteil können Additive sein, die zum Spritzpulver zugegeben werden, die ein Nachsintern der Wärmedämmschicht beim späteren Betrieb unterdrücken.

Bevorzugte Pulver für thermisch niedrig bis mittel belastete Bauteile, d.h. bei Temperaturen unterhalb 1000°C, sind solche aus $Al_2O_3$.

Ein weiteres, bevorzugte Pulver wird aus $ZrO_2$, insbesondere stabilisiertes $ZrO_2$, gebildet. Diese Keramiken zeichnen sich insbesondere durch ihre hohen Schmelzpunkte und geringe Wärmeleitfähigkeiten aus. Gerade bei diesen Materialien kann ein sehr definiertes Anschmelzen der Oberfläche erzielt werden. Im Hinblick auf $ZrO_2$ wird bevorzugt stabilisiertes $ZrO_2$ eingesetzt, wobei als Stabilisator $Y_2O_3$ in einer Menge von 4 bis 15 Gew.-%, selten bis zu 20 Gew.-%, bezogen auf die Gesamtmenge an Pulver eingesetzt werden sollte. Stabilisiertes $ZrO_2$ hat, gegenüber nicht mit einem Stabilisator versehenen $ZrO_2$, den Vorteil, daß bestimmte Phasen bei $ZrO_2$, beispielsweise die tetragonale Phase, bevorzugt eingestellt wird, und ein Phasenwechsel bei unterschiedlichen, variierenden Betriebstemperaturen verhindert wird.

Die nach dem angegebenen Verfahren hergestellten Wärmedämmstrukturen sind insbesondere für die Oberflächenbeschichtung von thermisch belasteten Bauteilen geeignet. Hierzu zählen Oberflächenschichten von Turbinenschaufeln, von Flugtriebwerksteilen, von Brennkammern oder deren Teilen.

Weitere Einzelheiten und Merkmale der Erfindung ergeben sich aus der nachfolgenden Beschreibung von Ausführungsbeispielen anhand der Zeichnung. In der Zeichnung zeigt

Figur 1     eine schematische Schnittdarstellung eines Substrats mit einer Zwischenschicht sowie einer darauf aufgebrachten geschlossenporigen Wärmedämmschicht,

Figur 2     den Schichtaufbau der Figur 1 mit einer zusätzlichen dichten Deckschicht auf der Wärmedämmschicht,

Figur 3     den Schichtaufbau der Figur 2, allerdings mit zwei Wärmedämmschichten, die durch eine Zwischenschicht voneinander getrennt sind, und

Figur 4     eine graphische Darstellung der Partikeldurchmesserverteilung der zum Plasmaspritzen eingesetzten Pulverfraktionen.

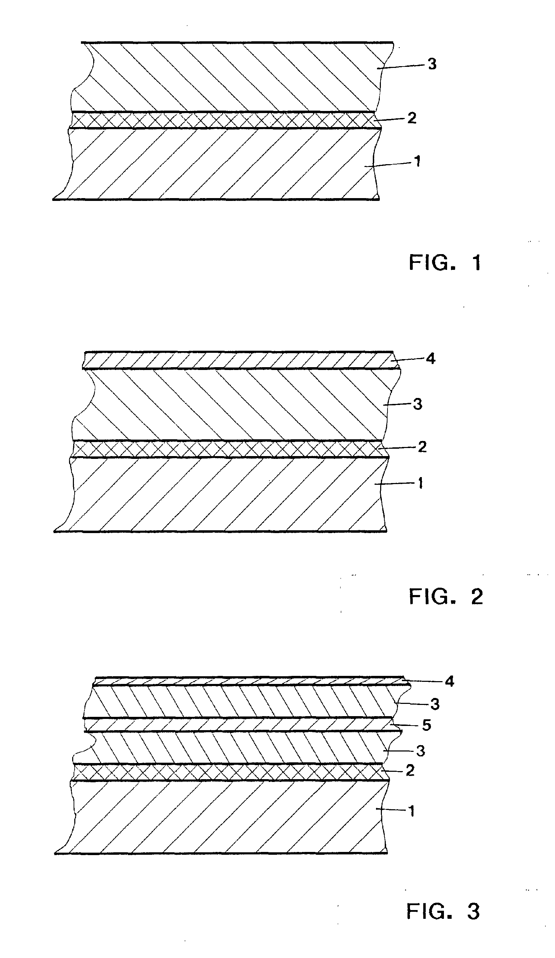

Wie bereits eingangs erwähnt, können solche Wärmedämmstrukturen, wie sie in den Figuren 1 bis 3 in verschiedenen Schnittdarstellungen gezeigt sind, sowohl aus Metallpulvern, aus Keramikpulvern, aber auch aus Kunststoffpulvern, aufgebaut werden.

In den Figuren 1 bis 3 sind drei verschiedene Schnittdarstellungen von Wärmedämmschichten gezeigt.

Figur 1 zeigt eine Grundstruktur mit einem Substrat 1, auf dem eine Haft- bzw. Zwischenschicht 2 aufgebracht ist. Diese Haft- oder Zwischenschicht 2 kann spritztechnisch aus einem Feinpulver gebildet werden, das geeignet gewählt ist, um sich einerseits gut mit dem Substrat 1 zu verbinden, das andererseits eine Grundlage für den Aufbau der Wärmedämmschicht bildet. Auf diese Haftschicht wird, wie in Figur 1 zu sehen ist, dann eine Wärmedämmschicht 3 aufgebracht. Gerade für die Wärmedämmschichten 3 eignen sich Keramikmaterialien. Eine bevorzugte Pulverfraktion für solche keramischen Materialien umfassen Pulverpartikel zwischen 5 und 150 µm. Geeignete Pulverdurchsatzmengen liegen dabei im Bereich von 5 bis 50 g/min. Diese Wärmedämmschicht 3 besitzt eine geschlossene Porosität, wobei die geschlossenen Poren durch den Anschmelzgrad und die eingesetzte Pulverfraktion eingestellt werden kann. Die Pulverpartikel mit dem größeren Durchmesser der Pulverfraktion werden nur in der Oberfläche angeschmolzen, so daß deren Grundform erhalten bleibt, während die Pulverpartikel mit den kleineren Durchmessern vollständig aufgeschmolzen werden und die Poren oder Porenkammern schließen. Mit dem Anschmelzgrad und der Wahl der eingesetzten Pulverfraktion kann demzufolge die Porenanzahl und der Porenradius der geschlossenen Poren in der Wärmedämmschicht 3 beeinflußt werden.

Eine vorteilhafte Ausführungsform, die in ihrem Aufbau grundsätzlich derjenigen in Figur 1 entspricht, ist in Figur 2 gezeigt. Auf die Wärmedämmschicht 3 ist eine dichte Abschluß- oder Abdeckschicht 4 aufgebracht. Diese Deckschicht 4 ist ebenfalls spritztechnisch gebildet, und zwar dadurch, daß beim Spritzen die Temperatur erhöht wird, so daß der Anschmelzgrad der Oberflächenschicht der Pulverpartikel erhöht wird und/oder der Anteil an feinkörnigerem Pulver erhöht wird. Durch die dichte Abschlußschicht 4 wird erreicht, daß die Oxidation/Korrosion der Wärmedämmschicht reduziert wird. Falls das Verfahren im Vakuum durchgeführt wird, bilden die geschlossenen Poren Wärmedämmzonen, deren Wärmedurchgang minimiert wird.

Weiterhin kann es vorteilhaft sein, Wärmedämmschichten 3 schichtweise aufzubauen, die jeweils durch eine dichte Zwischenschicht 5 getrennt sind, wie dies in Figur 3 schematisch dargestellt ist. In diesem Beispiel sind zwei Wärmedämmschichten 3 gezeigt. Auch bei einem solchen mehrschichtigen Aufbau wird vorzugsweise die obere Wärmedämmschicht 3 mit einer dichten Abschlußschicht 4 abgeschlossen. Ein Schichtaufbau der Wärmedämmschicht, wie er in Figur 3 eingesetzt ist, ist besonders in Anwendungsfällen geeignet, bei denen erhöhte Korrosion auftritt und/oder stark unterschiedliche Ausdehnungskoeffizienten des Basismaterials und des Wärmedämmmaterials vorliegen.

Wie erläutert ist, sollte das Ausgangspulver der Vorschrift

$$\frac{\Delta d}{d_a{}^{max}} < 0,35$$

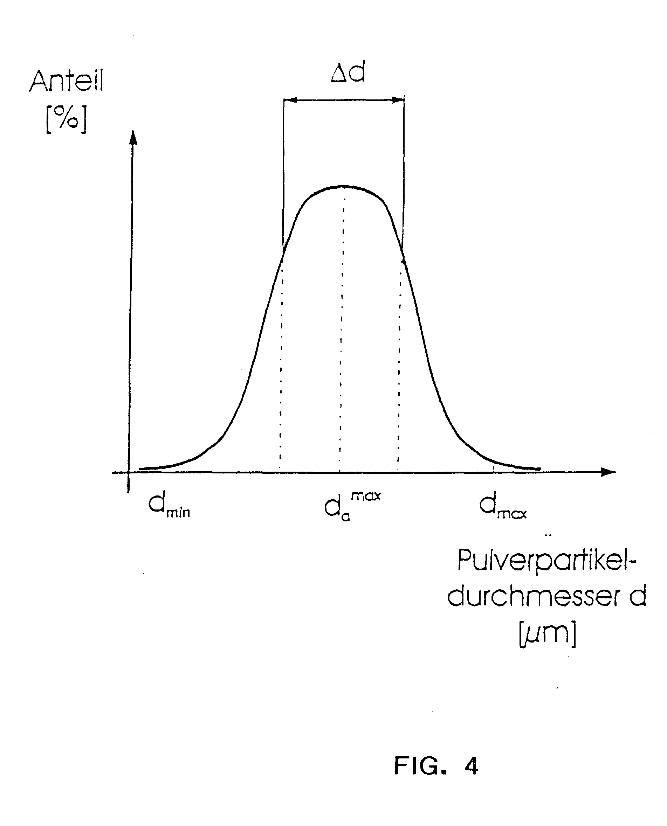

genügen; die Zusammenhänge zwischen $d_a{}^{max}$, $\Delta d$, $d_{min}$ (minimaler Partikeldurchmesser d) und $d_{max}$ (maximaler Partikeldurchmesser d) sind in Figur 4 dargestellt, und zwar in Abhängigkeit des prozentualen Anteils der jeweiligen Pulverpartikeldurchmesser, die in einem Ausgangspulver vorhanden sind.

Ein besonderer Vorteil, der durch das angegebene Verfahren angegeben ist, ist derjenige, daß die Schichtstrukturen, wie sie in den Figuren 1 bis 3 dargestellt sind, d.h. der Haftschichten 2, der Wärmedämmschichten 3, der Abdeckschichten 4 und eventueller Zwischenschichten 5, insbesondere durch ein Hochfrequenzplasmaspritzverfahren aufgebaut werden können, wobei zum Erzeugen der jeweiligen Schichtarten während des Beschichtungsvorgangs entsprechende Parameter, wie sie bereits erläutert wurden, geändert werden.

Zusammengefaßt ergeben sich folgende Vorteile durch das angegebene Verfahren:

- es können spritztechnisch geschlossenporige Wärmedämmschichten oder Wärmedämmschichtstrukturen erzeugt werden,

- sich variierende Schichtaufbauten können fortlaufend während des Aufbaus der Schichten durch Änderung der Verfahrensparameter erhalten werden,

- aufgrund der schmelzflüssig miteinander verbundenen, pulverförmigen Partikel ergibt sich ein guter Kontakt sowohl zum Substrat bzw. der Zwischenschichten als auch untereinander,

- es werden gute gefügetechnische Verbindungen der Pulverpartikel erhalten, da die Verweilzeiten in der Flamme, insbesondere im Plasma, sofern ein Plasmaspritzverfahren, das bevorzugt ist, eingesetzt wird, sehr kurz sind und die Erstarrung schnell stattfindet,

- der Grad der Porosität kann während des Prozesses eingestellt und verändert werden,

- es können Porositätsgradienten über die Dicke der Wärmedämmschicht erzeugt werden.

**Patentansprüche**

1. Verfahren zum Bilden einer Wärmedämmstruktur mit mindestens einer Wärmedämmschicht auf einem Substrat, die aus pulver- oder partikelförmigen Ausgangsmaterialien aufgebaut ist, wobei zwischen Substrat und Wärmedämmschicht eine Zwischen- oder Haftschicht aufgebracht wird, **dadurch gekennzeichnet,**
**daß** zum Bilden der Wärmedämmschicht(en) das Ausgangsmaterial thermisch auf dem Substratmaterial beschichtet wird, wobei die einzelnen Partikel in einer Flamme auf eine solche Temperatur gebracht werden, daß, zumindest ein Teil des Pulvers der eingesetzten Pulverfraktion, bei dem es sich um die Pulverpartikel mit dem kleineren Durchmesser handelt, nahezu durchgeschmolzen ist und der andere Teil der Pulverfraktion, bei dem es sich um die Pulverpartikel mit dem größeren Durchmesser handelt, nur oberflächlich angeschmolzen wird, wobei durch den Grad des Anschmelzens dieses Pulverteils die Porenstruktur gezielt eingestellt wird.

2. Verfahren nach Anspruch 1, **dadurch gekennzeichnet, daß** auf die Wärmedämmschicht eine im wesentlichen geschlossene, dichte Deckschicht aufgebracht wird, indem die Partikel für die Deckschicht im wesentlichen vollständig aufgeschmolzen werden.

3. Verfahren nach Anspruch 1 oder 2, **dadurch gekennzeichnet, daß** mehrere Wärmedämmschichten gebildet werden, die jeweils durch eine dichte Zwischenschicht voneinander getrennt sind, wobei die dichte Zwischenschicht aus im wesentlichen vollständig aufgeschmolzenen Partikeln gebildet ist.

4. Verfahren nach Anspruch 1, **dadurch gekennzeichnet, daß** die Beschichtung durch ein Hochfrequenzplasmaspritzverfahren erzeugt wird.

5. Verfahren nach Anspruch 1, **dadurch gekennzeichnet, daß** die Partikelgröße im Bereich von 5 $\mu$m bis 150 $\mu$m liegt.

6. Verfahren nach Anspruch 1, **dadurch gekennzeichnet, daß** eine Pulverfraktion eingesetzt ist, die Partikel in einem Durchmesserbereich zwischen einem minimalen Partikeldurchmesser $d_{min}$ und einem maximalen Partikeldurchmesser $d_{max}$ umfaßt, die folgender Vorschrift genügt:

$$0,35 < \frac{\Delta d}{d_a{}^{max}} \leq 1 \text{ oder } \frac{\Delta d}{d_a{}^{max}} > 1$$

wobei $d_a{}^{max}$ den Pulverpartikeldurchmesser angibt, der in der genannten Pulverfraktion den größten Anteil bildet, und wobei $\Delta d$ die Schwankungsbreite der Partikeldurchmesser um den Pulverpartikeldurchmesser darstellt, der am häufigsten in der gesamten Pulverfraktion vorkommt.

7. Verfahren nach Anspruch 6, **dadurch gekennzeichnet, daß** näherungsweise

$$d_a{}^{max} = \frac{d_{min} + d_{max}}{2}$$

gilt.

8. Verfahren nach Anspruch 6, **dadurch gekennzeichnet, daß** zur Erzeugung der zumindest teilweise geschlossenen Porenstruktur die Oberflächenschicht der Partikel angeschmolzen ist, wobei der Grad des Anschmelzens m folgender Vorschrift genügt:

$$m = \frac{d\text{-}d_s{}^*}{d}$$

wobei d: Partikeldurchmesser
$d_s{}^*$: verbleibender fester Kern
mit $10\% < m \leq 100\%$.

9. Verfahren nach Anspruch 6, **dadurch gekennzeichnet, daß** zur Erzeugung der geschlossenen Porenstruktur Partikel in den Fraktionsbereich

$$\frac{d_{min}}{d_{max}} < 0,7$$

eingesetzt sind.

10. Verfahren nach Anspruch 5, **dadurch gekennzeichnet, daß** Feinpartikel mit einer Partikelgröße im Bereich von 5 bis 50 $\mu$m, vorzugsweise von 10 $\mu$m bis 25 $\mu$m, in einem Anteil von 20 bis 80% bezogen auf die Masse vorliegen.

11. Verfahren nach Anspruch 10, **dadurch gekennzeichnet, daß** der Anteil 30 bis 50% bezogen auf die Masse beträgt.

12. Verfahren nach Anspruch 1 oder 3, **dadurch gekennzeichnet, daß** mehrere, porös strukturierte Schichten durch jeweils eine Zwischenschicht getrennt werden, wobei die Zwischenschicht dadurch erzeugt wird, daß die Pulverdurchsatzmengen gegenüber derjenigen bei der Erzeugung der darunterliegenden, porös strukturierten Schicht erhöht wird sowie der oberflächliche Anschmelzgrad der Partikel erhöht wird.

13. Verfahren nach Anspruch 12, **dadurch gekennzeichnet, daß** die Erhöhung der Pulverdurchsatzmenge um mindestens das 1,5-fache erfolgt.

14. Verfahren nach Anspruch 1, **dadurch gekennzeichnet, daß** in der (den) Wärmedämmschicht (en) ein Porenradius innerhalb der geschlossenporigen Struktur von 1 μm bis 30 μm erzeugt wird.

15. Verfahren nach Anspruch 5 und Anspruch 13, **dadurch gekennzeichnet, daß** der Porenradius durch Änderung der Leistung der Flamme und/oder des Drucks innerhalb der Beschichtungskammer eingestellt wird.

16. Verfahren nach Anspruch 1, **dadurch gekennzeichnet, daß** Additive zum Spritzpulver zugegeben werden, die ein Nachsintern der Wärmedämmschicht beim späteren Betrieb unterdrücken.

17. Verfahren nach einem der Ansprüche 1 bis Anspruch 16, **dadurch gekennzeichnet, daß** als Pulver $Al_2O_3$ bei thermisch niedrig bis mittel belasteten Bauteilen, d.h. bei Temperaturen unterhalb 1000°C, eingesetzt werden.

18. Verfahren nach einem der Ansprüche 1 bis Anspruch 17, **dadurch gekennzeichnet, daß** als Pulver $ZrO_2$, insbesondere stabilisiertes $ZrO_2$, eingesetzt wird.

19. Verfahren nach Anspruch 18, **dadurch gekennzeichnet, daß** $Y_2O_3$ als Stabilisator in einer Menge von 4 bis 15 Gew.-% bezogen auf die gesamte Menge des Pulvers eingesetzt wird.

20. Verwendung der nach einem der Ansprüche 1 bis 19 hergestellten Oberflächenschicht für die Oberflächenbeschichtung von thermisch belasteten Bauteilen.

21. Verwendung der nach einem der Ansprüche 1 bis 19 hergestellten Oberflächenschicht für die Oberflächenbeschichtung von Turbinenschaufeln.

22. Verwendung der nach einem der Ansprüche 1 bis 19 hergestellten Oberflächenschicht für die Oberflächenbeschichtung von Flugtriebwerksteilen.

23. Verwendung der nach einem der Ansprüche 1 bis 19 hergestellten Oberflächenschicht für die Oberflächenbeschichtung von Brennkammern oder deren Teilen.

FIG. 1

FIG. 2

FIG. 3

FIG. 4